# EUROPÄISCHE PATENTANMELDUNG

(11) **EP 2 682 338 A2**
(43) Veröffentlichungstag der Anmeldung: **08.01.2014**
(21) Anmeldenummer: 13003383.0
(22) Anmeldetag: 04.07.2013
(51) Int. Cl.: B63B 35/08, B63B 35/44

(54) **Wintertaugliche Energiegewinnungsanlage**

(30) Priorität: 04.07.2012 CH 10372012
(71) Anmelder: TNC Consulting AG, 8706 Feldmeilen (CH)
(72) Erfinder: Nordmann, Thomas, 8703 Erlenbach (CH)
(74) Vertreter: Alder, Hans Rudi

(57) **Zusammenfassung**

Eine schwimmende Photovoltaik-Anlage (5) umfasst eine Photovoltaik-Struktur (20) und eine Schwimmkörper-Struktur (nicht dargestellt). Die Schwimmkörper-Struktur umfasst mindestens einen Unterwasserschwimmer (8) und mindestens einen die Photovoltaik-Anlage (5) tragenden Mast (22). Zur Verwendung dieser Photovoltaik-Anlage (5) in einem Hybridkraftwerk (12) weist die Photovoltaik-Struktur (20) ein Freibord von mind. 1 m auf. Diese Photovoltaik-Anlage (20) ist mit mindestens einem Bifacial-Modul (21, 21') versehen.

## Beschreibung

Die vorliegende Erfindung betrifft eine schwimmende Energiegewinnungs-Anlage, insbesondere eine schwimmende Photovoltaik-Anlage mit einer Photovoltaik-Struktur und einer Schwimmkörper-Struktur gemäss Oberbegriff des Anspruchs 1.

Schwimmende Energiegewinnungs-Anlagen sind hinlänglich bekannt, beispielsweise aus der WO-2009000249. Leider erweist es sich, dass diese bekannten Anlagen bei winterlichen Verhältnissen, d.h. bei tiefen Temperaturen nicht verwendet werden können, insbesondere weil deren Schwimmer vom Eis blockiert werden (Sonnenstand-Verfolgung bei PV-Anlagen behindert) und sogar zerstört werden.

Es ist deshalb allgemein erwünscht diese Anlagen für deren Verwendung unter winterlichen Bedingungen betriebssicher zu machen, insbesondere einen Vereisungs- und Zerstörungsschutz der Schwimmer zu gewährleisten, eine Verbesserung der Energieproduktion während des Winters zu erzielen und insbesondere Drehbewegungen der Photovoltaik-Module, bspw. für die Sonnenstand-Verfolgung sicherzustellen.

So sind bereits enteisende (freeze resistant) Vorrichtungen für Bojen bspw. aus der US2005/0084418 bekannt. Leider erfordert die Beheizung dieser Bojen leistungsstarke Heizkörper, was diese Bojen nicht für extreme winterliche oder alpine Verhältnisse geeignet macht. Die zugeführte Wärmeenergie wird permanent von Luft, Wasser oder Eis weggeführt. Der Energieverbrauch erweist sich als unverhältnismässig.

Schwimmende PV-Anlagen, welche sich dem Sonnenstand entsprechend drehen lassen, sind ebenfalls hinlänglich bekannt, bspw. aus der US-4'786'795. Diese Anlagen schwimmen direkt auf der Wasseroberfläche und sind nicht gegen Vereisungen und deren Zerstörungskräfte geschützt. Darüber hinaus führt bei allen bekannten PV-Anlagen die flache Sonneneinstrahlung im Winter zu einer unerwünscht niedrigen Energieproduktion.

Es ist deshalb Aufgabe der vorliegenden Erfindung eine schwimmende PV-Anlage zu schaffen, welche bei winterlichen Verhältnissen betriebssicher arbeitet, insbesondere gegen Vereisung und deren Zerstörungskräfte geschützt ist und die saisonbedingten Einbussen bei der Stromproduktion kompensiert.

Diese Aufgabe wird erfindungsgemäss mit einer schwimmenden Photovoltaik-Anlage gelöst, welche die Merkmale des Anspruchs 1 aufweist. Insbesondere verwendet diese Anlage einen Aufbau mit einem schwimmenden Mast, wie er bspw. aus der WO-20099068712 bekannt ist. Dieser bekannte Aufbau umfasst eine Schwimmkörper-Struktur mit mindestens einem Unterwasserschwimmer (Tauchschwimmer) und eine Photovoltaik-Anlage. Bei der vorliegenden Erfindung umfasst die Photovoltaik-Anlage eine Photovoltaik-Struktur mit mindestens einem Photovoltaik-Modul. Diese beiden Strukturen (Schwimmkörper-Struktur, Photovoltaik-Struktur) sind über einen, im Wesentlichen vertikal stehenden Masten derart miteinander verbunden, dass die Schwimmkörper-Struktur vollständig unter Wasser liegt und die PV-Struktur vollständig über der Wasseroberfläche liegt. Erfindungswesentlich ist dabei, dass die Photovoltaik-Struktur ein Freibord von mind. 1 m, vorzugsweise mannshoch, resp. 7 m aufweist. Unter Freibord soll im Folgenden der Abstand zwischen dem Wasserspiegel und der untersten überflutbaren Kante der PV-Struktur verstanden werden.

Um die winterlichen Verhältnisse für eine effiziente Leistungssteigerung der schwimmenden PV-Anlage nutzen zu können, wird die erfindungsgemässe PV-Anlage mit Bifacial-Modulen ausgerüstet. Damit kann die indirekte, d.h. von der Eis- und/oder Schneefläche reflektierte Sonnenstrahlung zusätzlich genutzt werden. Insbesondere soll die erhöhte Einstrahlung in alpinen Bereichen genutzt werden können.

Es versteht sich, dass in der bevorzugten Ausführungsform die erfindungsgemässe PV-Anlage derart dimensioniert ist, dass der Schwerpunkt der gesamten Photovoltaik-Anlage unterhalb des Auftriebsschwerpunktes (Form- oder Verdrängungsschwerpunkt) der Schwimmkörper-Struktur liegt wie dies aus der genannten WO-2009068712 für die Energiegewinnung bei schwimmenden Windkraftanlagen bekannt ist.

Für die vorliegende Erfindung eignen sich insbesondere vertikal stehende, spierenbojenartige (spar-buoy-like) Unterwasserschwimmkörper, wie sie aus der WO-2009068712 bekannt sind, aber auch horizontal liegende, rohrförmige (submarine-like) Unterwasserschwimmkörper, wie sie aus der U-Boot Technik bekannt sind.

Bei einer bevorzugten Ausführungsform der erfindungsgemässen PV-Anlage ist diese mit einer Verankerung versehen, welche sich dem Wasserpegel selbsttätig anpasst, um den Aufbau stationär über Grund positioniert zu halten. Solche Vorrichtungen sind für Bojen in Gewässern mit starkem Tidenhub bekannt und bspw. in der JP-7081669 beschrieben.

Insbesondere ist die Schwimmkörperstruktur der erfindungsgemässen Photovoltaik-Anlage mit einer Vorrichtung zur Verhinderung des Festfrierens (anti-freeze system) versehen. Eine solche Vorrichtung weist insbesondere Mittel auf, um mindestens den in der Nähe der Wasseroberfläche liegenden Bereich der Schwimmkörperstruktur zu beheizen, und/oder mit einem, vorzugsweise warmen, Wasser- oder Luftstrom zu umspülen, und/oder diesen Bereich in eisbrechender Weise bewegbar auszubilden, insbesondere in vertikaler Richtung oszillierbar und/oder axial drehbar auszubilden.

Vorzugsweise ist die Photovoltaik-Struktur (insbesondere ein Fachwerkbau) der erfindungsgemässen Photovoltaik-Anlage verschwenkbar, um diese an den jeweiligen Höhenwinkel des Sonnenstandes auszurichten. Es versteht sich, dass die erfindungsgemässe Photovoltaik-Struktur in einer bevorzugten Ausführungsform um eine vertikale Achse drehbar ist, um die PV-Module an den jeweiligen Horizontalwinkel (Azimut) des Sonnenstandes auszurichten. In einer besonderen Weiterbildung der erfindungsgemässen Photovoltaik-Anlage lässt sich die Photovoltaik-Struktur derart neigen, dass die einzelnen Module im Wesentlichen vertikal stehen, insbesondere um Schneelasten abwerfen zu können.

In einer konkreten Ausführungsform der erfindungsgemässen Photovoltaik-Anlage weist die Photovoltaik-Struktur eine Vielzahl auf einer Kreis- oder Rechteck-Fläche verteilte reihenweise angeordnete Photovoltaik-Module auf. Im Folgenden soll die Erfindung anhand eines Ausführungsbeispiels und mit Hilfe der Figuren näher erläutert werden. Dabei zeigen:
- Fig. 1:: schwimmendes Photovoltaik-Modul bekannter Art;
- Fig. 2:: schwimmende Photovoltaik-Plattform bekannter Art;
- Fig. 3:: schwimmende Windkraft Anlage bekannter Art;
- Fig. 4:: schwimmende Photovoltaik-Anlage bekannter Art für Gewässer mit stark schwankendem Pegelstand;
- Fig. 5:: räumliche Sicht auf eine erfindungsgemässe Photovoltaik-Struktur;
- Fig. 6:: räumliche Sicht unter eine erfindungsgemässe Photovoltaik-Struktur;
- Fig. 7:: Ansicht eines erfindungsgemässen Photovoltaik-Parks mit schirmförmig aufgerihten Photovoltaik-Strukturen;
- Fig. 8:: Ansicht eines erfindungsgemässen Photovoltaik-Parks mit bandförmig aufgereihten Photovoltaik-Strukturen.

Die Energiewende verlangt nach schnell umsetzbaren Lösungen, bei welchen die Photovoltaik-Technik in vorhandene Stromnetze eingebunden werden kann. Dabei ist auch zu berücksichtigen, dass die Leistungsregulierung dem Bedarf im 24-Stunden-Rhytmus und dem Jahresverlauf angepasst geregelt werden muss. Die gleichzeitige Nutzung von Wasser und Sonne führt zu einfachen Lösungen, insbesondere die Kombination von schwimmenden Photovoltaik-Strukturen mit bestehenden Wasserkraftwerken. Diese Kombination von Energiegewinnung soll im Folgenden auch Hybridkraftwerk genannt werden. Die Anordnung von einzelnen Solarinseln mit einer Fläche von 300-400m² auf Stauseen bildet eine technologische Symbiose von Wasserkraft- und Solarstromgewinnung.

Im Folgenden soll unter der Photovoltaik-Struktur eine Konstruktion verstanden werden, die eine Vielzahl einzelner Photovoltaik-Module trägt. Unter der Schwimmkörper-Struktur soll hier eine Konstruktion verstanden werden, welche den Teil der erfindungsgemässen Anlage umfasst, welche unter Wasser liegt sowie mindestens einen die Photovoltaik-Struktur tragenden Mast.

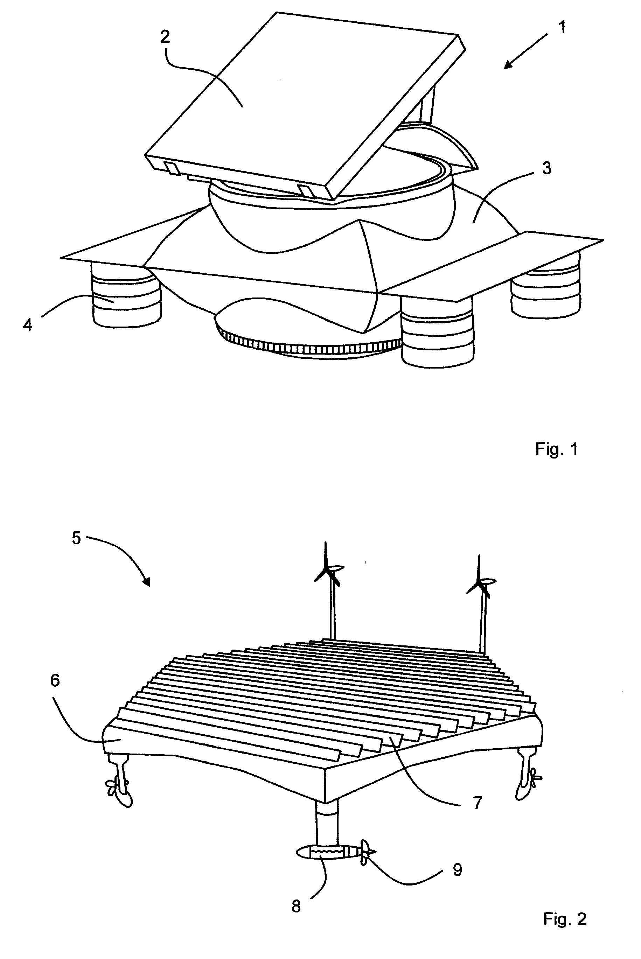

Fig. 1 zeigt ein schwimmendes Photovoltaik-Element 1 mit einem Photovoltaik-Modul 2, welches auf einem flossartigen Schwimmkörper 3 mit mehreren Schwimmern 4 montiert ist und bspw. aus der WO-2010144955 bekannt ist. Dieses gezeigte Element lässt sich mit weiteren solchen PV-Elementen 1 koppeln, um derart ein ganzes Solarfeld zu gestalten.

Die in Fig. 2 dargestellte Photovoltaik-Anlage 5 umfasst eine schwimmende Plattform 6, auf welcher mehrere Reihen 7 mit Photovoltaik-Modulen montiert sind. Die gesamte Plattform 6 weist mehrere Unterwasserschwimmer 8 auf und lässt sich mit Hilfe von Unterwasserantrieben 9 um eine zentrale Achse drehen. Die Unterwasserschwimmer 8 lassen sich kontrolliert fluten oder mit Luft füllen, um eine unterschiedliche Lastenverteilung auszugleichen und um die Plattform bei unruhiger See besser zu stabilisieren. Es versteht sich, dass sich diese bspw. in der WO-2009000249 beschriebene Konstruktion nicht für winterliche Verhältnisse mit Frostbildung eignet.

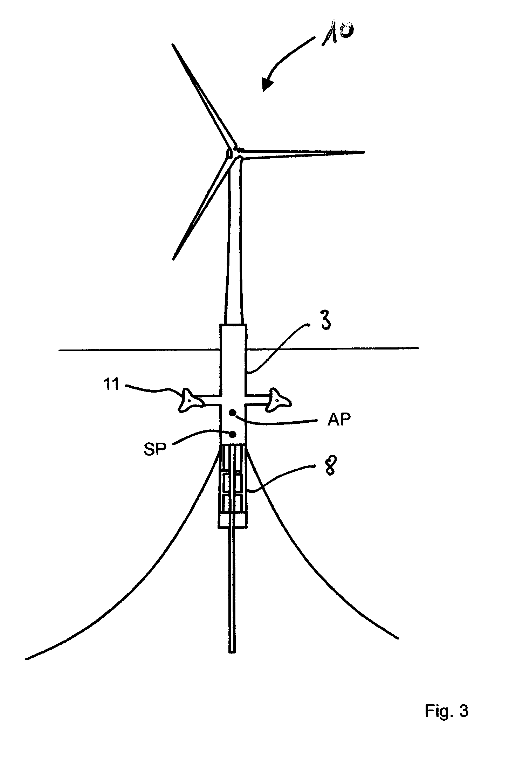

Die in Fig. 3 dargestellt schwimmende Windkraft-Anlage macht das von der erfindungsgemässen Photovoltaik-Anlage 5 verwendete Schwimmer-Prinzip deutlich. Dabei liegt der Auftriebspunkt AP, manchmal auch Formschwerpunkt FP genannt, oberhalb des Schwerpunktes SP der gesamten Windkraft-Anlage 10. Als Auftriebspunkt AP soll hier der Schwerpunkt der von der Schwimmer-Struktur verdrängten Flüssigkeit gemeint sein. Der Formschwerpunkt AP ist also der Punkt, an dem der statische Auftrieb angreift. Solche Anlagen sind bspw. aus der WO-2009068712 (nächst liegender Stand der Technik) bekannt und nicht Gegenstand der vorliegenden Erfindung. Um die Stabilität einer solchen Windkraft-Anlage 10 zu kontrollieren sind aufwendige Steuerungsvorrichtungen 11 erforderlich. Diese eignen sich nicht für den Einsatz in alpinen Gebieten. Es versteht sich, dass die vorliegende Photovoltaik-Struktur auch mit einer derartigen Windkraftanlage kombiniert werden kann. Insbesondere kann durch die erfindungsgemässe Verwendung von Bifacial-Modulen die Energieausbeute wesentlich erhöht werden.

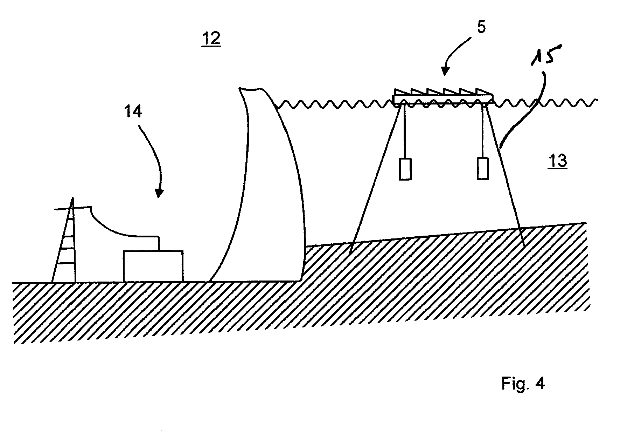

Das in Fig. 4 dargestellte Hybridkraftwerk 12 umfasst eine im Staubecken 13 eines Wasserkraftwerks 14 schwimmende Photovoltaik-Anlage 5. Dabei wird von der PV-Anlage dieselbe stromführende Infrastruktur des Wasserkraftwerks genutzt. Eine solche Anordnung ist bereits aus der EP-2299499 bekannt. Leider erlaubt die konkrete Konstruktion dieser schwimmenden PV-Anlage 5 keine Nutzung in einer alpinen Umgebung.

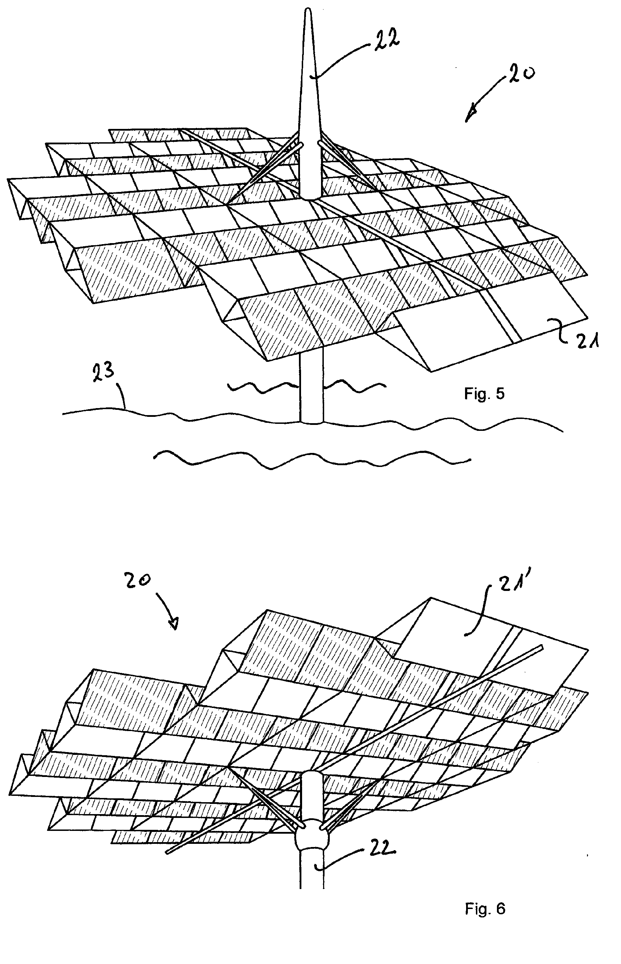

Fig. 5 und Fig. 6 zeigen jeweils eine räumliche Sicht auf und unter eine erfindungsgemässe Photovoltaik-Struktur 20. Diese Struktur hat vorzugsweise einen Durchmesser von ca. 30 m. Erfindungsgemäss ist diese Struktur mit Bifacial-Modulen 21. 21' ausgerüstet. Durch die Verwendung von Unterwasserschwimmern (nicht dargestellt) wird die allgemeine Betriebssicherheit erhöht. Die verwendete Konstruktion weist in einer besonderen Ausführungsform einen Mast 22 von ca. 1 m Durchmesser auf und hält extremen Umwelteinflüssen, wie Eisdruck, Wellengang, Schwemmgut, Wind-oder Schneelasten in einfacher Weise stand. Die Module 21. 21' lassen sich damit dem schwankenden Wasserpegel 23 in einfacher Weise anpassen ohne ihre Position über Grund zu verlieren. Die Unterwasserschwimmer, auch Tauchschwimmer genannt, befinden sich einige Meter unter Wasser und tragen die Photovoltaik-Anlage. Sie sind am Boden verankert. Da sich die Haupttragteile der Konstruktion unter Wasser befinden und nur ein Trägerrohr/Mast die Wasseroberfläche durchdringt, sind die Angriffsflächen für Wellen und Eis sehr klein. Entsprechend gering sind die mechanischen Belastungen für die gesamte Konstruktion. Ein Kippmechanismus erlaubt die Anpassung an die Höhe der Sonnenbahn und bei starkem Schneefall auch eine senkrechte Stellung. Mittels eines Drehmotors am Kopfende können die Photovoltaik-Module dem Sonnenstand nachgeführt werden. Der Betrieb und die Wartung der erfindungsgemässen Anlage auf dem Wasser erweisen sich als unproblematisch, da die erforderlichen Wartungs-und Kontrollarbeiten über den Wasserweg jederzeit und in einfacher Weise durchgeführt werden können. Wiederum erweist sich die erfindungsgemässe Verwendung von Bifacial-Modulen 21, 21' im alpinen Bereich als überraschend effizient.

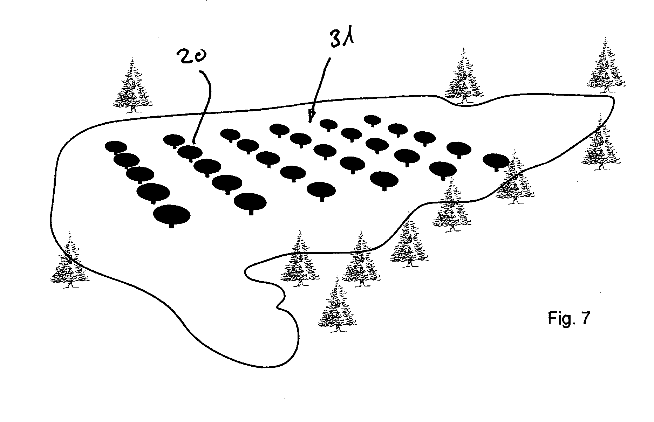

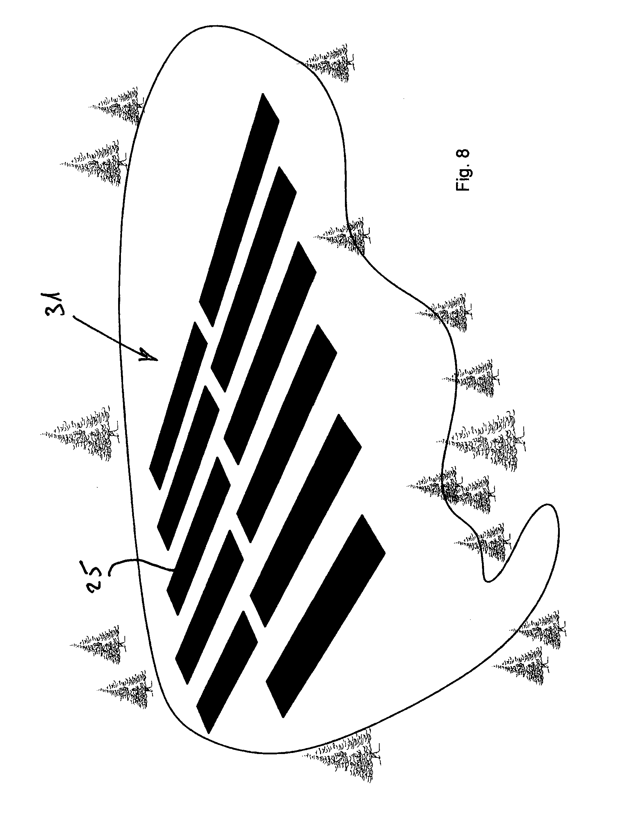

Fig. 7 und Fig. 8 zeigen Ansichten eines erfindungsgemässen Photovoltaik-Parks 31 jeweils mit schirmförmigen Photovoltaik-Strukturen 24 resp. mit bandförmigen Photovoltaik-Strukturen 25.

Die Vorteile der erfindungsgemässen Photovoltaik-Anlage mit Photovoltaik-Modulen, welche über der Wasseroberfläche gehalten werden, sind insbesondere auch darin zu sehen, dass die Module luftumspült sind und so im Durchschnitt tiefere Modultemperaturen aufweisen und damit einen höheren Wirkungsgrad erzielen. Zudem wird die Reflektion des Tageslichtes und die direkte Sonneneinstrahlung auf der Seeoberfläche mit genutzt. Technisch spricht man vom Albedo-Gewinn. Bei geschlossener Eisschicht und schneebedeckter Oberfläche erhöht sich dieser Anteil weiter. Messungen in vergleichbaren Situationen zeigen einen Albedo-Gewinn von 30-50%. Die schwimmenden Strukturen können vorteilhafterweise ein-oder zweiachsig der Sonnenbahn nachgeführt werden, um den Ertrag weiter zu steigern. Die Anordnung der Photovoltaik-Anlagen im alpinen Bereich ändert das Verhältnis Sommer-Winter zugunsten des Winteranteils. Ein Energieproduktionsanteil von bis zu 40% im Winterhalbjahr kann erwartet werden und kommt damit den Bedürfnissen einer ausgeglichenen Stromproduktion während des ganzen Jahres entgegen. Es versteht sich, dass Sonnenenergie nur am Tag genutzt werden kann. Dabei ist jedoch keine direkte Sonneneinstrahlung nötig. Die erfindungsgemässen Hybridkraftwerke können auch bei diffusem Himmelslicht Strom produzieren und den speicherbaren Strom aus Wasserkraft ideal ergänzen. Das Zusammenwirken der beiden Energiegewinnungsanlagen erhöht die Versorgungssicherheit. Darüber hinaus kann die Leistungsfähigkeit der erfindungsgemässen Hybridkraftwerke mehr als verdoppelt werden. Insbesondere kann an schönen Tagen die Lastkurve des Langzeitverbrauchs optimal versorgt werden. Gleichzeitig reduziert der solarerzeugte Strom den Wasserverbrauch des Hybridkraftwerkes, so dass das angestaute Wasservolumen für sonnenarme Tage und für die Nacht zur Verfügung steht. Als besonders vorteilshaft erweist sich auch der Umstand, dass die bestehenden Wasserkraftwerke ohne nennenswerte bauliche Veränderungen und deren elektrische Einspeise-Infrastruktur genutzt werden kann.

Eine Modellrechnung am Beispiel eines 11 km² grossen Stausees in der Schweiz zeigt überraschende Erkenntnisse. Um die vom Wasserkraftwerk jährlich erzeugte Strommenge von 260 Mio. kWh mit Photovoltaik-Strom zu verdoppeln, benötigt man eine Netto-Zellenfläche von nur 1.7 km². Das ist eine überraschend eindrückliche Flächeneffizienz für die Solarstromnutzung. Bei einer Pilot-Anlage auf ca. 1600 m.ü.M. und in einem Stausee mit einem über 60 m schwankendem Wasserpegel und einer ca. 1 m dicken Eisdecke im Winter können, bei einer aktiven Modulfläche von ca. 400 m², etwa 60 bis 90 MWh/a Strom erzeugt werden. Das entspricht einem Anteil an der Stromproduktion von 40% und mehr im Winterhalbjahr. Dabei werden mehrere Photovoltaik-Module im Parallelbetrieb und mit eigenen Wechselrichtern, 3-phasig und mit 380 V geführt. Diese Werte können mit der erfindungsgemässen Verwendung von Bifacial-Modulen nennenswert gesteigert werden. Die Einspeisung des erzeugten Stroms ins lokale Netzwerk des Wasserkraftwerks erfolgt gebündelt über ein Unterwasserkabel. Schweizer Stauseen werden normalerweise 2 bis 5 Mal jährlich gefüllt und entleert.

### Referenzzeichen

- 1.: Photovoltaik-Element
- 2.: Photovoltaik-Modul
- 3.: Schwimmkörper
- 4.: Schwimmer
- 5.: Photovoltaik-Anlage
- 6.: schwimmende Plattform
- 7.: Photovoltaik-Modul-Reihe
- 8.: Unterwasserschwimmer
- 9.: Unterwasserantrieb
- 10.: schwimmende Windkraftanlage
- 11.: Steuerungsvorrichtung
- 12.: Hybridkraftwerk
- 13.: Staubecken
- 14.: Wasserkraftwerk
- 15.: Verankerung
- 20.: Photovoltaik-Struktur
- 21., 21'.: Bifacial-Modul
- 22.: Mast
- 23.: Wasserpegel
- 24.: schirmförmige Photovoltaik-Struktur
- 25.: bandförmige Photovoltaik-Struktur
- 31.: Photovoltaik-Park

## Patentansprüche

1. Schwimmende Photovoltaik-Anlage (5) mit einer Photovoltaik-Struktur (20) und einer Schwimmkörper-Struktur (nicht dargestellt), wobei die Schwimmkörper-Struktur mindestens einen Unterwasserschwimmer (8) umfasst,
**dadurch gekennzeichnet, dass** die Photovoltaik-Anlage (5) mindestens einen die Photovoltaik-Struktur (20) tragenden Mast (22) umfasst und zur Verwendung der schwimmenden Photovoltaik-Anlage (5) in einem Hybridkraftwerk (12) deren Photovoltaik-Struktur (20) ein Freibord von mindestens 1 m aufweist.

2. Schwimmende Photovoltaik-Anlage (5) nach Anspruch 1, **dadurch gekennzeichnet, dass** die Schwimmkörper-Struktur (nicht dargestellt) derart dimensioniert ist, dass der Schwerpunkt SP der gesamten Photovoltaik-Anlage (5) unterhalb deren Auftriebspunktes AP, auch Form- oder Verdrängungsschwerpunkt genannt, liegt.

3. Schwimmende Photovoltaik-Anlage (5) nach Anspruch 1 oder 2, **dadurch gekennzeichnet, dass** diese mit einer Verankerung (15) versehen ist, welche sich dem Wasserpegel (23) selbsttätig anpasst, um die Photovoltaik-Anlage (5) über Grund stationär positioniert zu halten.

4. Schwimmende Photovoltaik-Anlage (5) nach einem der Ansprüche 1 bis 3, **dadurch gekennzeichnet, dass** der Unterwasserschwimmer (8) ein vertikal stehender, insbesondere ein spierenbojenartiger (spar-buoy-like) Unterwasserschwimmkörper oder ein horizontal liegender, insbesondere ein rohrförmiger Unterwasserschwimmkörper ist.

5. Schwimmende Photovoltaik-Anlage (5) nach einem der Ansprüche 1 bis 4, **dadurch gekennzeichnet, dass** die Schwimmkörper-Struktur (nicht dargestellt) mit einer Vorrichtung zur Verhinderung des Festfrierens (anti-freeze system) versehen ist.

6. Schwimmende Photovoltaik-Anlage (5) nach Anspruch 5, **dadurch gekennzeichnet, dass** die Vorrichtung zur Verhinderung des Festfrierens Mittel aufweist, um mindestens den in der Nähe der Wasseroberfläche liegenden Bereich der Schwimmkörperstruktur zu beheizen, oder mit einem vorzugsweise warmen Wasser- oder Luftstrom zu umspülen, oder diesen Bereich in eisbrechender Weise bewegbar auszubilden, insbesondere in vertikaler Richtung oszillierbar und/oder axial drehbar auszubilden.

7. Schwimmender Photovoltaik-Anlage (5) nach einem der Ansprüche 1 bis 6, **dadurch gekennzeichnet, dass** die Photovoltaik-Struktur (20) verschwenkbar ist, um diese an den jeweiligen Höhenwinkel des Sonnenstandes auszurichten.

8. Schwimmende Photovoltaik-Anlage (5) nach einem der Ansprüche 1 bis 7, **dadurch gekennzeichnet, dass** die Photovoltaik-Struktur (20) und/oder die Schwimmkörper-Struktur (nicht dargestellt) um eine vertikale Achse drehbar ist, um diese an den jeweiligen Horizontalwinkel (Azimut) des Sonnenstandes auszurichten.

9. Schwimmende Photovoltaik-Anlage (5) nach einem der Ansprüche 1 bis 8, **dadurch gekennzeichnet, dass** diese eine Vielzahl auf einer Kreis- oder Rechteck-Fläche verteilte, reihenweise angeordnete Bifacial-Module (21, 21') aufweist.

10. Schwimmende Photovoltaik-Anlage (5) nach einem der Ansprüche 1 bis 9, **dadurch gekennzeichnet, dass** diese im alpinen Bereich angeordnet ist.

11. Schwimmende Photovoltaik-Anlage (5) nach Anspruch 1, **dadurch gekennzeichnet, dass** diese mindestens ein Bifacial-Modul (21, 21') umfasst.
